# EUROPÄISCHE PATENTSCHRIFT

(11) **EP 1 423 037 B1**
(45) Veröffentlichungstag und Bekanntmachung des Hinweises auf die Patenterteilung: **24.10.2007**
(21) Anmeldenummer: 02797610.9
(22) Anmeldetag: 22.08.2002
(51) Int. Cl.: A47J 19/02

(54) **FRUCHTPRESSE**
FRUIT PRESS
PRESSE A FRUITS

(30) Priorität: 29.08.2001 DE 10142246
(43) Veröffentlichungstag der Anmeldung: 02.06.2004
(73) Patentinhaber: BSH Bosch und Siemens Hausgeräte GmbH, 81739 München (DE)
(72) Erfinder: STEFFL, Michael, 83250 Marquartstein (DE); AREH, Marko, 2360 Radlje ob Dravi (SI); MAZEJ, Stanislav, 3303 Gomilsko (SI)
(86) Internationale Anmeldenummer: PCT/EP2002/009401
(87) Internationale Veröffentlichungsnummer: WO 2003/020089

(56) Entgegenhaltungen:
- DE-A- 2 806 096
- DE-U- 8 908 774
- US-A- 4 125 064

## Beschreibung

Die Erfindung bezieht sich auf eine Fruchtpresse mit einem rotierenden, mittig angeordneten, herausragenden und sich nach oben verjüngenden Element zum Auspressen einer Frucht und mit einem das Element ringförmig umgebenden und fest mit diesem verbundenen Auffangbehältnis mit einer Ringfläche, die Offnungen für den Durchtritt von Fruchtsaft aufweist, sowie einem in das Auffangbehältnis hineinragandes, ortsfestes Mittel zum Heraus pressen des Fruchtsafts aus in dem Auffangbehältnis vorhandenem Fruchtfleisch.

Eine gattungsbildende Fruchtpresse ist beispielsweise aus DE 89 08 774 41 bekannt.

Aus der DE 1 982 544 U1 ist eine Zitruspresse bekannt, die eine einem Presskegel nachgeordnete mechanische Pressvorrichtung für das durch den Presskegel von der Fruchtschale gelöste Fruchtfleisch aufweist. Die Pressvorrichtung weist eine Förderschnecke auf, die unterhalb des Presskegels auf dessen Antriebswelle angeordnet ist und von dem Siebmantel eines den Presskegel umgebenden Siebs umgeben ist.

Ebenfalls aus der EP 0 362 058 B1 ist eine Fruchtpresse bekannt. Diese Fruchtpresse hat einen elektrischen Antriebsmotor. Der Motor ist innerhalb des Gehäuses gelagert. Über einen Antriebsriemen und Riemenscheiben treibt er eine abtriebsseitige Welle an, auf der die Fruchtpresse gelagert ist.

Im Übrigen sei noch auf die DE 28 06 096 hingewiesen.

Es ist die Aufgabe der Erfindung, eine Fruchtpresse so zu verbessern, dass die Saftausbeute erhöht wird.

Erfindungsgemäß wird diese Aufgabe bei einer Fruchtpresse der eingangs genannten Art durch die Merkmale des kennzeichnenden Teils von Anspruch 1 gelöst.

Durch das zusätzlich eingebrachte Mittel zum Herauspressen des Fruchtsafts wird die Fruchtsaftausbeute erhöht. Das Mittel ist ortsfest angeordnet, während sich das Auffangbehältnis dreht. Durch das Zusammendrücken des durch den Presskegel aus der Frucht herausgedrückten Fruchtfleisches ist es möglich die Gebrauchszeit der Fruchtpresse wesentlich zu verlängern, beispielsweise zu verdoppeln, ohne sie reinigen zu müssen. Vorteilhafte Weiterbildungen der Erfindung ergeben sich aus den Unteransprüchen und aus der Beschreibung.

Das Mittelweist mindestens einen nach unten geneigten Flügel auf, durch den der Fruchtsaft aus in dem Auffangbehältnis vorhandenem Fruchtfleisch durch Drehung herausdrückbar ist.

Das Mittel umfasst einen das Auffangbehältnis umgebenden Ringkörper.

Bevorzugt ist der Ringkörper derart aufgebaut, dass er eine erste, eine Außenwand des Auffangbehältnisses nach innen überkragende und in das Auffangbehältnis herunterragende Wand hat, an der der mindestens eine Flügel befestigt ist. Auf diese Weise ist ein einfach aufgebautes Gefäß geschaffen, das die Fruchtpresse umgibt. Die Wand trägt ebenfalls dazu bei, dass sich kein Fruchtfleisch in den bis in eine Mantelwand des Auffangbehältnisses hochragenden Schlitze zum Auslass des Fruchtsaftes ablagert und festsetzt.

In einer Weiterbildung der Erfindung weist der Ringkörper einen nach außen weisenden Kragen auf, mit dem er auf einer Auffangschale aufliegt. Durch diesen Aufbau wird ein leicht zu handhabender Aufbau für eine Fruchtpresse und eine unten ihr angeordnete Schale geschaffen.

In einer weitereren bevorzugten Ausführungsform der Erfindung weist der Ringkörper eine zweite, zwischen der Außenwand des Auffangbehältnisses und einer Mantelwand der Auffangschale herunterragende Wand auf.

Nachstehend wird die Erfindung in einem Ausführungsbeispiel anhand der Zeichnungen näher erläutert. Diese zeigen:
- Fig. 1: eine teilweise geschnittene Schrägansicht einer Fruchtpresse und
- Fig.2: und eine teilweise geschnittene Schrägansicht eines die Fruchtpresse umgebenden Ringkörpers.

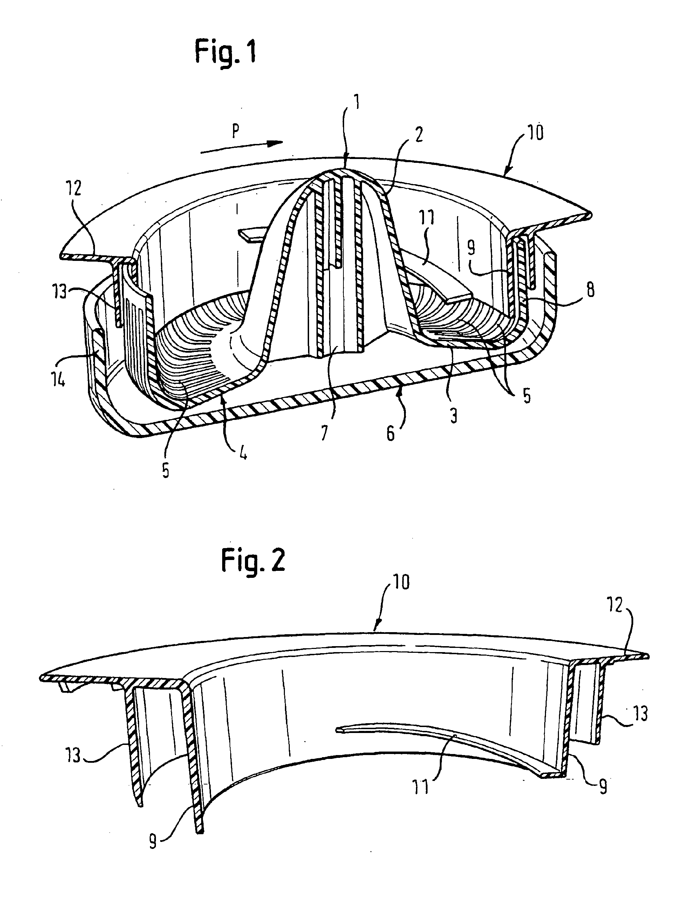

Eine Fruchtpresse 1 (Fig. 1) Eine Fruchtpresse 1 weist ein mittig angeordnetes Element 2 auf, das im wesentlichen die Gestalt eines Rotationsparaboloids, einer Halbkugel; eines halben Ellipsoids oder eines Kegels hat und das an seinem Boden von einer Ringfläche 3 umgeben ist. In der Ringfläche 3 sammelt sich Fruchtsaft, der beim Auspressen einer Frucht über dem Element 2 entsteht. Die Ringfläche 3 ist Teil eines Auffangbehältnisses 4. Aus diesem tropft der Fruchtsaft durch rippenförmig angeordnete Schlitze 5 in eine Auffangschale 6, in der der Fruchtsaft aufgefangen wird.

Das Element 2 ist im wesentlichen als Hohlkörper ausgebildet, in dem zum Drehantrieb der Fruchtpresse 1, d. h. des Elements 2 und des ihn umgebenden Auffangbehältnisses 4, eine Hohlwelle 7 zur Aufnahme eines (hier nicht dargestellten) Wellenzapfens zentral angeordnet ist, der mit einer Antriebswelle eines Antriebsmotors in Verbindung steht.

Das Auffangbehältnis 4 hat eine kreisrunde Außenwand 8, über die eine Wand 9 eines ortsfesten Ringkörpers 10 herunterragt. Auf der Innenseite der Wand 9 sind zwei Flügel 11 angeordnet, die in Drehrichtung des Auffangbehältnisses nach unten derart nach unten geneigt sind, dass Fruchtfleisch, das sich während des Auspressvorgangs aus der auszupressenden Frucht gelöst hat, im Bereich zwischen den Flügeln 11 und der Ringfläche 3 mehr und mehr zusammengedrückt wird und auch aus dem Fruchtfleisch noch Fruchtsaft herausgedrückt oder -gequetscht wird. Zudem haben die Flügel 11 die Wirkung, dass das Fruchtfleisch derart zusammengedrückt wird, dass es den bei dem Pressvorgang nachfließenden Fruchtsaft nicht aufsaugt und dass die Fruchtpresse 1 nicht so oft zur Reinigung aus der Auffangschale 6 herausgenommen werden muss.

Der Ringkörper 10 (Fig. 2) hat ferner einen nach außen weisenden Kragen 12, mit dem er auf der Auffangschale 6 aufliegt, und eine Wand 13, die zwischen der Außenwand 8 des Auffangbehältnisses 4 und einer Mantelwand 14 der Auffangschale 6 herunterragt.

Durch die Erfindung wird eine Fruchtpresse 1 geschaffen, die ein rotierendes, mittig angeordnetes, herausragendes und sich nach oben verjüngendes Element 2 zum Auspressen einer Frucht aufweist. Das Element 2 ist von einer Auffangschale 6 umgeben, in die eine Wand 9 eines ortsfesten Ringkörpers 10 herunterragt. An der Wand 9 ist ein Mittel zum Zusammendrücken des Fruchtfleisches vorhanden, das bei Drehung der Fruchtpresse 1 durch einen motorischen Antrieb in Richtung eines Pfeils P das Fruchtfleisch nach unten drückt. Bevorzugt ist das Mittel ein Flügel 11 oder eine Mehrzahl von Flügeln 11, die auf der Innenseite der Wand 9 befestigt sind.

## Patentansprüche

1. Fruchtpresse (1) mit einem rotierend mittig angeordneten, herausragenden und sich nach oben verjüngenden Element (2) zum Auspressen einer Frucht und mit einem das Element (2) ringförmig umgebenden und fest mit diesem verbundenen Auffangbehältnis (4) mit einer Ringfläche (3), die Öffnungen für den Durchtritt von Fruchtsaft aufweist, sowie einem in das Auffangbehältnis (4) hineinragendes, ortsfestes Mittel zum Herauspressen des Fruchtsafts aus in dem Auffangbehältnis (4) vorhandenem Fruchtfleisch, **dadurch gekennzeichnet, dass** das Mittel mindestens einen in Drehrichtung nach unten geneigten Flügel (11) aufweist, durch den das Fruchtfleisch zwischen Flügel (11) und Ringfläche (3) zusammengedrückt wird.

2. Fruchtpresse (1) nach Anspruch 1, **dadurch gekennzeichnet, dass** der nach unten geneigte Flügel (11) sich wendelförmig entlang eines Teils des Umfangs des Auffangbehältnises (4) erstreckt,

3. Fruchtpresse (1) nach Anspruch 1 oder 2, **dadurch gekennzeichnet, dass** der Flügel (11) an einem das Auffangbehältnis (4) umgebenden Ringkörper (10) angeordnet ist.

4. Fruchtpresse (1) nach Anspruch 2 und 3, **dadurch gekennzeichnet, dass** der Ringkörper (10) eine erste in das Auffangbehältnis (4) herunterragende Wand (9) aufweist, die eine Außenwand (8) des Auffangbehältnisses (4) nach innen überkragt.

5. Fruchtpresse (1) nach Anspruch 4, **dadurch gekennzeichnet, dass** der mindestens eine Flügel (11) an der herunterragende Wand (9) befestigt ist.

6. Fruchtpresse (1) nach einem der Ansprüche 3 bis 5, **dadurch gekennzeichnet, dass** der Ringkörper (10) einen nach außen weisenden Kragen (12) aufweist, mit dem er auf einer Auffangschale (6) aufliegt.

7. Fruchtpresse (1) nach einem der Ansprüche 3 bis 6, **dadurch gekennzeichnet, dass** der Ringkörper (10) eine zweite herunterragende Wand (13) aufweist, die zwischen 5 der Außenwand (8) des Auffangbehältnissses (4) und einer Mantelwand (14) der Auffangschale (6) verlaufend angeordnet ist.

## Claims

1. Fruit squeezer (1) with a rotating, centrally arranged, outwardly projecting and upwardly tapering element (2) for squeezing out a fruit and with a collecting container (4), which annularly surrounds the element (2) and is fixedly connected therewith, with an annular surface (3), which has openings for the passage of fruit juice, as well as a stationary means, which protrudes into the collecting container (4), for squeezing out fruit juice from fruit flesh present in the collecting container (4), **characterised in that** the means has at least one vane (11), which is inclined downwardly in rotational direction and by which the fruit flesh can be compressed between vane (11) and annular surface (3).

2. Fruit squeezer (1) according to claim 1, **characterised in that** the downwardly inclined vane (11) extends helically along a part of the circumference of the collecting container (4).

3. Fruit squeezer (1) according to claim 1 or 2, **characterised in that** the vane (11) is arranged at an annular body (10) surrounding the collecting container (4).

4. Fruit squeezer (1) according to claim 2 and 3, **characterised in that** the annular body (10) has a first wall (9), which projects downwardly into the collecting container (4) and which juts inwardly over an outer wall (8) of the collecting container (4).

5. Fruit squeezer (1) according to claim 4, **characterised in that** the at least one vane (11) is fastened to the downwardly projecting wall (9).

6. Fruit squeezer (1) according to one of claims 3 to 5, **characterised in that** the annular body (10) has an outwardly pointing collar (12) by which it rests on a collecting bowl (6).

7. Fruit squeezer (1) according to one of claims 3 to 6, **characterised in that** the annular body (10) has a second downwardly projecting wall (13) which is arranged to extend between the outer wall (8) of the collecting container (4) and a circumferential wall (14) of the collecting bowl (6).

## Revendications

1. Presse-fruit (1) comprenant un élément (2) disposé au centre de rotation, débordant et se rétrécissant vers le haut pour le pressage d'un fruit et un récipient collecteur (4) entourant l'élément (2) à la façon d'un anneau et relié de façon fixe à cet élément avec une surface annulaire (3), qui présente des ouvertures pour le passage du jus de fruit, et un moyen fixe, dépassant dans le récipient collecteur (4), pour l'extraction par pressage du jus de fruit de la pulpe de fruit présente dans le récipient collecteur (4), **caractérisé en ce que** le moyen présente au moins une ailette (11) inclinée vers le bas dans le sens de rotation, par laquelle la pulpe de fruit est comprimée entre l'ailette (11) et la surface annulaire (3).

2. Presse-fruit (1) selon la revendication 1, **caractérisé en ce que** l'ailette inclinée vers le bas s'étend de manière hélicoïdale le long d'une partie du pourtour du récipient collecteur (4).

3. Presse-fruit (1) selon la revendication 1 ou 2, **caractérisé en ce que** l'ailette (11) est disposée sur un corps annulaire (10) entourant le récipient collecteur (4).

4. Presse-fruit (1) selon les revendications 2 et 3, **caractérisé en ce que** le corps annulaire (10) présente une première paroi (9) débordant dans le récipient collecteur (4), qui déborde d'une paroi extérieure (8) du récipient collecteur (4) vers l'intérieur.

5. Presse-fruit (1) selon la revendication 4, **caractérisé en ce que** la au moins une ailette (11) est fixée sur la paroi (9) débordante.

6. Presse-fruit (1) selon l'une quelconque des revendications 3 à 5, **caractérisé en ce que** le corps annulaire (10) représente un rebord (12) dépassant vers l'extérieur, avec lequel il repose sur une coupelle collectrice (6).

7. Presse-fruit (1) selon l'une quelconque des revendications 3 à 6, **caractérisé en ce que** le corps annulaire (10) présente une seconde paroi (13) débordant vers le bas, qui est disposée entre la paroi extérieure (8) du récipient collecteur (4) et une paroi d'enveloppe (14) de la coupelle collectrice (6).
